# EUROPEAN PATENT SPECIFICATION

(11) **EP 3 247 006 B1**
(45) Date of publication and mention of the grant of the patent: **27.02.2019**
(21) Application number: 16169937.6
(22) Date of filing: 17.05.2016
(51) Int. Cl.: H01R 39/12, H01R 39/54

(54) **CONTACT ARRANGEMENT FOR A ROTATIONAL BEARING**
KONTAKTANORDNUNG FÜR ROTATIONSLAGER
AGENCEMENT DE CONTACT POUR UN ROULEMENT

(43) Date of publication of application: 22.11.2017
(73) Proprietor: Siemens Aktiengesellschaft, 80333 München (DE)
(72) Inventor: Diehl, Dirk, 91088 Bubenreuth (DE); Andersen, Lars Ole, 8850 Bjerringbro (DK); Noer, Bjarne, 8800 Viborg (DK)

(56) References cited:
- WO-A1-2013/086531
- US-A1- 2009 181 554
- US-A1- 2014 334 758
- US-B1- 6 169 682

## Description

The invention relates to a contact arrangement, in particular a contact arrangement based on slip rings, for electrically contacting an inner and an outer bearing element of a rotational bearing, in particular a rotational bearing for a wind turbine. The invention further relates to a rotational bearing with such a contact arrangement, to a wind turbine generator with such a rotational bearing and to a method for operating such a rotational bearing.

Many applications require rotational bearings for allowing a coaxial rotation between two elements. Within the bearing, the rotation motion can take place between two bearing elements, which are referred to as inner and outer bearing elements (or more specifically: bearing shells) according to their radial position. In many applications it is important to suppress electrical discharges between the inner and outer bearing elements, in particular if these elements are made of or at least contain electrically conductive materials. Prior art document US2014334758 discloses a contact arrangement for electrically contacting an inner and an outer bearing element of a rotational bearing allowing a coaxial rotation between the inner and outer bearing elements, the contact arrangement comprising a contact holder mountable on a first one of the two bearing elements, at least two sliding contact elements mounted on the contact holder, wherein each sliding contact element is suitable for forming a sliding contact with a part of a surface of the second one of the two bearing elements.

One important application for such rotational bearings is for the connection of rotating and stationary parts in a wind turbine. A wind turbine comprises one or more rotor blades. The rotor blades are connected to a hub. The rotor blades and the hub form the rotor of a wind turbine. The wind interacts with the rotor and causes a rotation of the rotor. The rotation of the rotor is transferred to an electrical generator, either directly or via a gearing to increase the rotational speed. The rotational energy of the rotor is then converted into electrical energy.

The rotation of the rotor is often transferred over a shaft. The rotor, the shaft and the rotor of the generator are rotatable in respect to the stationary part of the wind turbine. The hub, and in cases the shaft, need to be connected to the stationary part of the wind turbine by a rotational bearing.

Known rotational bearings for wind turbines are often built as ball bearings or roller bearings. One problem during the operation of a wind turbine is that voltages can build up between the inner and outer bearing elements, for example between inner and outer bearing shells or inner and outer bearing rings. Such voltages can lead to electrical discharges, which can then lead to a damage of the rotational bearing, for example by the mechanism of electrical discharge machining. In particular, punctual breakthroughs between a ball or roller and the surface on which it moves (sometimes referred to as a racetrack) can significantly accelerate wearing of the rotational bearing. To protect rotational bearings of such premature wear by electrical discharge, it has been known to introduce a permanent current path in parallel to the inner and outer bearing elements, in other words a shunt. Such a shunt can be formed by adding an electrical connection element, typically in the form of a sliding contact element, for example a brush contact. Such a sliding contact element can provide an electrical connection between an electrically conductive outer bearing element and an electrically conductive inner bearing element for all relative rotational positions of the bearing. This measure can significantly reduce the risk of electrical discharges across the bearing.

It has turned out that the resistance of a sliding contact can be a strong function of the current going through the contact. The resistance is typically much higher in the low-current range than in the high-current range. For example, for a brush made of graphite, copper, silver, steel or an alloy material slipping on a ring of above mentioned materials (in which usually different materials of brush and slip are combined) shunting two bearing elements made of high tensile steel, the resistance can be ten times higher at brush current densities of < 0.3mA/mm² than at brush current densities of > 3mA/mm².

It should be mentioned that in general, one of the surfaces of a bearing element can act as a slip ring directly, especially through a polished surface. This surface can then get in contact with the brush. Alternatively, a slip ring of a different material and/or a specially treated ring mounted on the bearing shell can be used for establishing the contact.

Due to the dependence of the resistance on the current, the resistance of such a brush contact shunt can sometimes be too high to reduce the build-up of a voltage across the bearing, and a direct electrical discharge between inner and outer bearing element can sometimes not be prevented. This is particularly the case, when the brushes carry low currents, and this situation often arises in the brush connections used to shunt the rotational bearings in wind power turbines.

It is therefore a goal of the present invention to provide a contact arrangement for a rotational bearing, in which the resistance of the electrical contact between inner and outer bearing element is reduced. A further goal of the invention is to provide a rotational bearing with such an improved contact arrangement and a method for operating such a rotational bearing.

These objects of the invention are achieved by claim 1 with respect to the contact arrangement, by claim 7 with respect to the rotational bearing and by claim 14 with respect to the method.

The contact arrangement according to the invention is configured for electrically contacting an inner and an outer bearing element of a rotational bearing allowing a coaxial rotation between the inner and outer bearing elements. The contact arrangement comprises a contact holder mountable on a first one of the two bearing elements and at least two sliding contact elements mounted on the contact holder. Each sliding contact element is suitable for forming a sliding contact with a part of the surface of the second one of the two bearing elements. The contact holder and the sliding contact elements are disposed such that a secondary winding of a transformer is formed with at least one winding loop extending along a first sliding contact element, the contact holder, the second contact element and a part of the surface of the second bearing element, provided that at least the surface is formed of an electrically conductive material. The contact arrangement further comprises a primary winding with at least one winding loop, wherein the primary and secondary windings are disposed to form a transformer.

In other words, an electrically conductive loop can be formed between the contact holder, the two sliding contact elements and that part of the surface of the second bearing element, which is located between the two sliding contact elements. In order to allow the formation of such an electrically conductive loop, the sliding contact elements, the contact holder and the surface of the second bearing element should be electrically conductive. In this context, it is to be understood that the mentioned surface of the second one of the two bearing elements can also be the surface of an additionally mounted specific sliding ring, which can for example be of a different material and/or have been subject to a different surface treatment than the bulk of this bearing element.

If the bearing elements of the rotational bearing are rotated with respect to each other, the sliding contact elements slide along the surface of the second bearing element and contact different positions of this surface for each rotational position. Therefore, for each such rotational position, the part of the surface located between the two sliding contact elements will be different. But for each rotational position, an electrically conductive loop will still be formed across the contact holder, the two sliding contact elements and the part of the surface of the second bearing element between them. Due to the formation of this electrically conductive loop the mentioned components can act together to form the secondary winding of a transformer. This secondary winding can comprise further winding loops in addition to the one winding loop just described, however only the one above-mentioned loop is sufficient for acting as a secondary transformer winding. The other (primary) transformer winding is integrated within the contact element, and the two windings are configured such that they can interact with each other to form an overall transformer. In other words, the primary and secondary windings are inductively coupled, such that an alternating current applied at the primary winding can induce an alternating current at the secondary winding. Due to this configuration, the resistance between the two bearing elements across the two sliding contact elements can be modified by applying current at the primary winding, which leads to an alternating current flow across the secondary winding. In particular, the induced flow of alternating current in the secondary winding can lead to a decreased resistance of the sliding contact elements in the electrical path between the two bearing elements. This is generally the case if the resistance-current characteristic is such that the resistance across the sliding contact element decreases with increased current. In this case, the functionality of the sliding contact elements for preventing electric discharges between the two bearing elements of the rotational bearing can be improved by feeding an alternating current into the primary winding of the transformer.

The above-mentioned surface of the second bearing element, along which the sliding contact elements can slide, can generally be a ring-shaped surface. In particular, the surface can be an inner our outer cylindrical surface with circular cross section. Alternatively, the surface can also be a ring-shaped side surface of a bearing element with circular cross section. In general, it is important that the (at least) two sliding contact elements are configured such that they can slide along the circumference of such a surface, which maintaining electrical contact between the two bearing elements through both sliding contact elements for all rotational positions of the bearing. In order to achieve this, the contact holder should also be mounted so as to be in electrical contact with an electrically conducting surface of the first bearing element. When this is the case, the two bearing elements are shunted via both sliding contact elements, and the feeding of alternating current into the transformer reduces the resistance of both these parallel shunts.

The rotational bearing according to the invention comprises an inner bearing element and an outer bearing element, wherein the rotational bearing is disposed to allow a coaxial rotation between the inner and outer bearing elements. The bearing further comprises at least one contact element according to the present invention, wherein the contact holder is mounted on a first one of the two bearing elements and wherein the sliding contact elements are each arranged to form a sliding contact with part of a surface of the second one of the two bearing elements. The advantages of this rotational bearing are analogous to the above-mentioned advantages of the contact arrangement.

A wind turbine according to the present invention comprises at least one rotational bearing according to the present invention. The advantages of this wind turbine are also analogous to the advantages of the contact arrangement and the rotational bearing.

The method according to the present invention is a method for operating the above-mentioned rotational bearing. The method comprises the step of providing an alternating current to the primary winding of the at least one contact arrangement. The advantageous of the method also follow from the above-mentioned advantages of the rotational bearing.

Advantageous configurations and embodiments of the method according to the invention follow from the claims dependent on claim 1, claim 7, claim 13 and claim 14 as well as the following description. The advantageous features of the contact arrangement, the rotational bearing, the wind turbine and the method can generally be combined.

The contact holder can generally be U-shaped. This shape is advantageous to allow the formation of a loop of the secondary winding of the above-mentioned transformer. In particular, U-shaped contact holder can comprise two arms, which can be at least long enough to bridge a radial gap between the two bearing elements of the rotational bearing.

Irrespective of whether the contact holder is U-shaped or not, it can generally be of a mirror symmetric shape, where each of two symmetric sides is connected to one of the sliding contact elements.

The contact arrangement can further comprise a transformer core suitable for inductively coupling the primary winding and the secondary winding of the transformer. Advantageously, this transformer core can comprise or even consist of a soft magnetic material, in particular iron.

The transformer core can advantageously comprise a stack of laminated electrically conducting sheets. Irrespective of its composition, the transformer core can advantageously be E-shaped or 8-shaped and/or comprise an E-shaped part.

The contact arrangement can further comprise an alternating current source which is configured to provide an alternating current (AC) to the primary winding of the transformer. In particular, this current source can be configured to deliver alternating current at a voltage at or below 1V and a current of at least 1 A, in particular at least 10 A. The advantage of operating the transformer in this low-voltage, high-current regime is that a high current can also be induced in the secondary winding, and then the resistance across the sliding contact elements can be more significantly reduced than by a lower-current operation. Particularly, the alternating current source and the primary and secondary windings of the transformer can be configured that an alternating current of at least 1 A, more favorably at least 10 A, can be fed into the secondary winding of the transformer.

The current source can for example be configured to provide an alternating current of a frequency in the range of about 50 Hz or about 60 Hz. However, the frequency can also be higher or lower than these two examples, a suitable frequency range is for example between 1 Hz and 10 MHz, particularly favorably between 10 Hz and 100 kHz.

The secondary winding of the transformer can have exactly one loop, which is then the loop provided by the contact holder, the two sliding contact elements and the part of the surface of the second bearing element between the two contact elements, as described above. Optionally, the secondary winding can have more loops in addition to this first loop. A single loop can be preferred however, in order to achieve a small inductance in the secondary winding and therefore to keep the impedance low for high-frequency shunt currents.

The primary winding of the transformer can have one or more loops, in particular the number of loops can favorably be in the range between 1 and 1000, most favorably between 10 and 1000. The ratio of number of loops in the primary winding versus the number of loops in the secondary winding can favorable be below 1000.

The sliding contact elements can in particular be brush contact elements. Suitable materials for such brush contact elements are for example copper, brass, steel, silver or an alloy - particularly including one of these metals - or graphite. In general and favorably, the sliding contact elements can be disposed such that the resistance across the contact element and between the two bearing elements falls with increasing current, particularly in the current range between 10mA and 10 A or in the current densities range between 0.02mA/mm² and 20mA/mm².

In general, the resistance of each sliding contact element along its direction of current transport between the two bearing elements can be favorably below 0.5 Ohm. With a resistance in the range the build-up of voltages that are high enough to lead to damage due to electrical discharge can favorably be prevented.

The cross section with respect to this direction of current transport can be favorably between 200 mm² and 2000 m² - particularly about 500 mm² - for each brush. The cross section can be favorably above 200 mm², because then the sliding contact elements are better suited to withstand occasional high lighting currents. The cross section can be favorably below 2000 mm², because then the current density during normal operation of the contact arrangement can be high enough to allow a sufficiently low shunt resistance for suppressing electrical discharges between the bearing elements.

In the rotational bearing according to the invention, the first bearing element can for example be the outer bearing element and the second bearing element can be the inner bearing element of the rotational bearing. In other words, the contact holder with the at least two sliding contact elements can be mounted to the outer bearing element and the sliding contacts can then slide on a surface of the inner bearing element. Alternatively, the first bearing element can be the inner bearing element and the second bearing element can be the outer bearing element.

Independent of which bearing element is the first or second bearing element, one or both of the two bearing elements can be a bearing shell and/or a bearing ring.

In general the rotational bearing can be a rolling-element bearing, in particular of the type of a ball bearing or roller bearing. In this type of bearing, the rolling elements - in particular balls or cylindrical rollers - can be distributed over the circumference of the bearing and can be radially positioned between the inner and outer bearing elements. The shape of these rolling elements then helps to reduce the friction between inner and outer bearing elements during the rotational motion. Alternatively or in addition to these rolling elements, the rotational bearing can comprise a lubricating fluid between the inner and outer bearing elements. Alternatively, the bearing can also be a magnetic bearing.

The rotational bearing can comprise a plurality of contact arrangements according to the present invention. These contact arrangements can then be distributed across a circumference of the rotational bearing. For example, in the general case of ring-shaped first and second bearing elements, the contact arrangements can be mounted via their contact holders on a circumference of a ring-shaped surface of the first bearing element, and the sliding contacts can be brought into electrical contact with a ring-shaped surface of the second bearing element, at different circumferential positions, according to the position of each contact arrangement along the perimeter of the first bearing element and according to the respective angular position of the two bearing elements at each moment.

Such a plurality of contact arrangement can lead to a particularly favorable configuration, where a plurality of pairs of parallel shunt paths is provided between the two bearing elements, thus reliably preventing electrical discharges between them. All the sliding contact elements of the plurality of contact arrangements are connected in parallel by the two bearing elements, which are in electrical contact with each.

In the embodiments with a plurality of contact arrangements in the bearing, the bearing can in principle comprise only one alternating current source, which can be used to feed the primary windings of all the contact arrangements. This configuration is very simple, because few electrical components are required in order to reliably prevent electrical discharges.

In another preferred configuration, the bearing can also comprise several alternating current sources. In particular, there can be at least three current sources, and these current sources can be used to feed three or more contact arrangements. In particular the number of contact arrangements can then be three or a multiple of three. In this type of embodiment, the multiple current sources can be configured to provide alternating currents to the primary windings of the multiple contact arrangements, which providing a phase shift between the different alternating currents at each contact arrangement or group of contact arrangements. The respective relative phase shift between each (group of) contact arrangement(s) can in particular be 120°. This configuration is particularly favorable for providing at least one reliable shunt path with low resistance at any given time. This is because at a given time, when in one contact arrangement there is a zero crossing of the alternating current, which leads to a high resistance in the respective sliding contact at this moment, at least one other contact arrangement is not in such a zero-crossing state, but instead has a high current and consequently a low resistance at that moment.

A similar advantage can be achieved by providing several alternating current sources which can drive the primary windings of the plurality of contact arrangements at different frequencies. In this case, the different frequencies also lead to situations, where usually in at least one (and usually more) of the contact arrangements there is a state with a significant amount of current and therefore significantly lowered shunt resistance, compared to a state with zero current.

Therefore, the embodiments with several contact arrangements driven by several current sources with differing operating conditions provide a safety mechanism, where usually at least one contact arrangement provides a low resistivity shunt path between the two bearing elements of the bearing.

In general, the resistance across the sliding contact elements can also be frequency dependent, and a frequency range which provides a comparatively low resistance can favorably be selected.

The rotational bearing can favorably be a rotational bearing for a wind turbine. Accordingly, a wind turbine with such a bearing is also claimed. In wind turbines, it is particularly important to use rotational bearings, where electrical discharges between the bearing elements are suppressed and a premature aging of the bearing due to such discharges is prevented.

The method for operating the rotational bearing according to the invention, the bearing can favorably be of the type comprising a plurality of contact arrangements, as described above. Then, also the method can comprise the step of providing an alternating current to each of the primary windings of the plurality of contact arrangements, where each contact arrangement is driven with a current of different phase and/or different frequency.

Further advantages and details of the invention may be found in the exemplary embodiments described below and in the drawings, in which:
- Fig. 1: shows a schematic representation of the dependency of the resistance across a single sliding contact element as a function of current density,
- Fig. 2: shows a schematic perspective view of a rotational bearing according to an embodiment of the invention,
- Fig. 3: shows a detailed view of a contact arrangement within the rotational bearing of Fig. 2,
- Fig. 4: shows a sectional view of the contact arrangement of Fig. 3,
- Fig. 5: shows a different sectional view of the contact arrangement of Fig. 3.

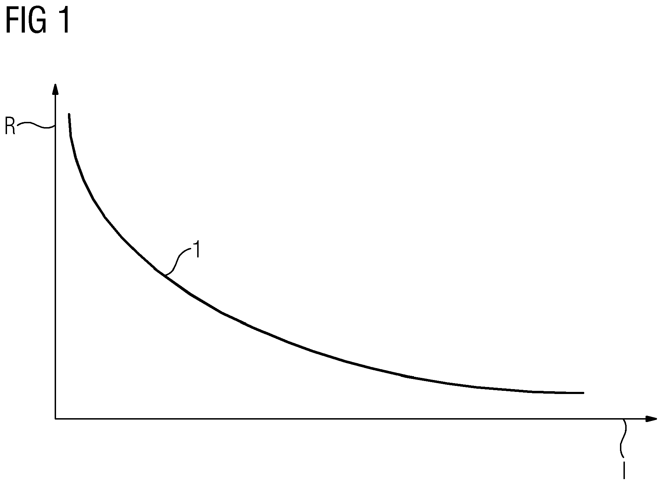

Fig. 1 shows a schematic representation of the dependency of the resistance across a single sliding contact element as a function of current density. The sliding contact element can be a contact element between two bearing elements of a rotational bearing according to the state of the art. However, the sliding contact element can also be one of the two sliding contact elements in a contact arrangement according to the present invention.

As can be seen from the resistance-current characteristic 1 shown in Fig. 1, the resistance is a falling function of increasing currents and therefore also current density for a given geometry and dimensions of the sliding contact element. The resistance-current characteristic 1 is non-linear in the sense that the slope of the curve is even stronger for lower currents. The dependence shown in Fig. 1 is only a very schematic representation, but it is typical for many types of sliding contact elements of different materials. For example, such contact elements can be made of or comprise copper, brass, steel, silver, alloy, graphite. It has been observed and it is favorable in the context of the current invention that the resistance can be lowered by at least a factor of ten by increasing the current density in the sliding contact element from 0.2mA/mm² to 2mA/mm². From the dependency shown in Fig. 1 it can be seen that it can be favorable to operate such a sliding contact element at higher average currents, for example at average currents above 1A, because then the average resistance is significantly lower than at lower average currents.

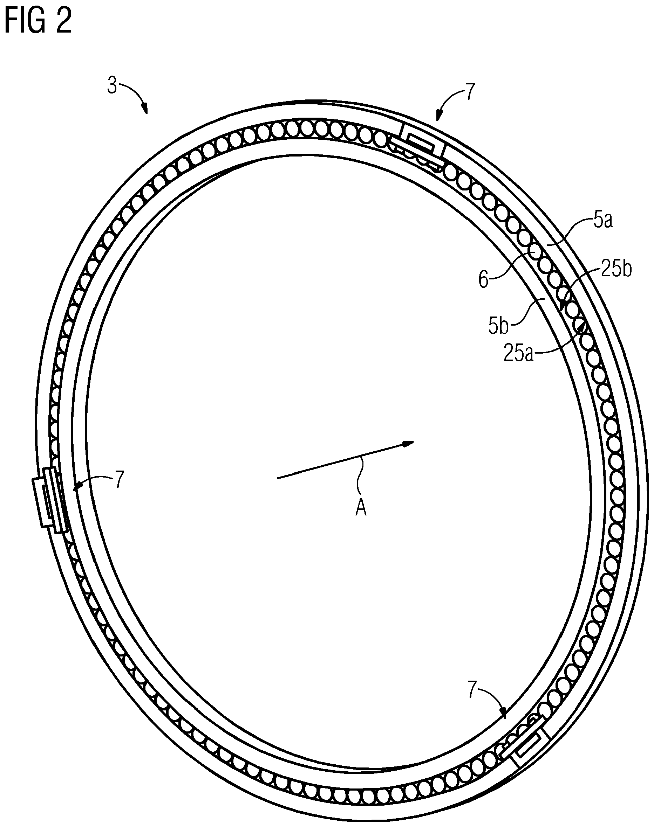

Fig. 2 shows a schematic perspective view of a rotational bearing according to an embodiment of the invention. This rotational bearing is a bearing for the connection of rotating and stationary parts in a wind turbine. The bearing comprises an outer bearing element 5a and an inner bearing element 5b which can rotate relative to each other with respect to a rotational axis A. For example, within the wind turbine, the outer bearing element 5b can be the rotating element and can be attached to other rotating parts, and the inner bearing element can be the stationary element and can be attached to other stationary parts. However, the outer bearing element 5b can in principle also be the stationary element and the inner bearing element 5a can be the outer bearing element.

In the example of Fig. 2, the inner and outer bearing elements are shown as circular rings. However, the structures of these bearing elements 5a and 5b can also be more complex, where inner and outer bearing elements have a more complex cross section, for example in the form of bearing shells. In general however, inner and outer bearing elements each can have at least one surface in the shape of a circular cylinder which can be rotated against each other. More particularly, an inner surface 25a of the outer bearing element 5a is in relatively close proximity to and can rotate against an outer surface 25b of the inner bearing element 5b. The axis of relative rotation A is then also a symmetry axis of each of the cylindrical surfaces 25a and 25b.

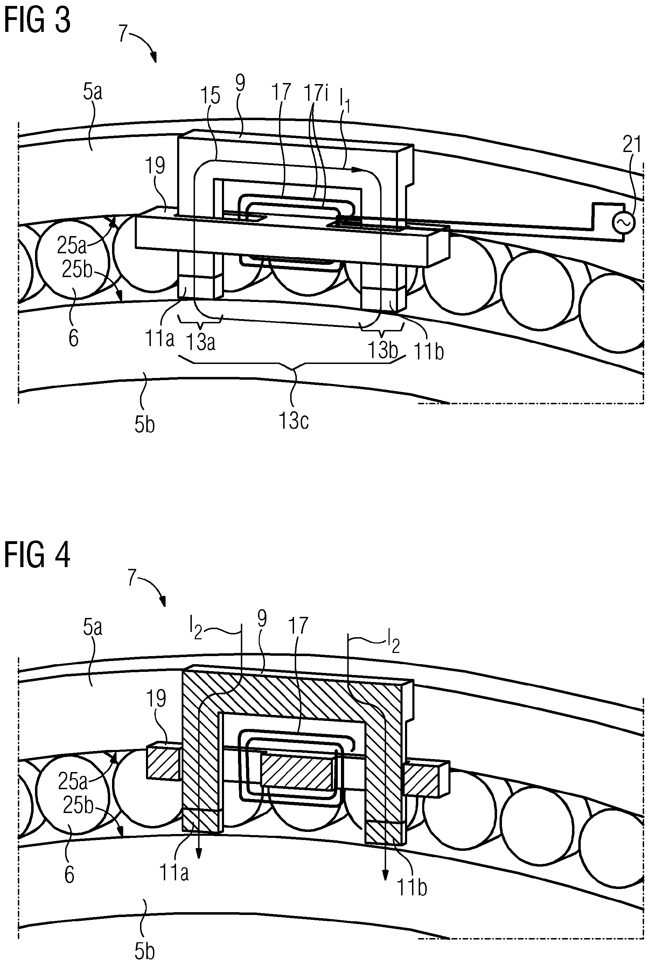

The rotational bearing of Fig. 2 comprises three contact arrangements 7, each of a same or similar configuration and according to the present invention. The configuration of one of these contact arrangements is shown in more detail in perspective schematic view in Fig. 3.

As Fig. 3 shows, the contact arrangement 7 comprises a U-shaped contact holder which is mounted on the first and in this case outer bearing element 5a. The first bearing element 5a and the contact holder 9 are both electrically conductive and the mounting of the contact holder 9 provides an electrically conductive connection between first bearing element 5a and contact holder. In the example of Fig. 3, the contact holder 9 has a central part which extends essentially along the local direction of the circumference of the first bearing element 5a, and it has two arms which extend essentially radially inwards, towards the second and in this case inner bearing element 5b. Two sliding contact elements 11a and 11b are mounted on the radially inner ends of these arms at a radial (and axial) position where they can provide a sliding electrical contact with the electrically conductive inner bearing element 5b. Each sliding contact element 11a and 11b is in electrical contact with a respective part 13a, 13b of the ring-shaped outer surface of the inner bearing element. A current can also flow across the part 13c of the inner bearing element which extends between these two contacted surface parts 13a and 13b.

Due to the configuration of the contact holder 9, sliding contact elements 11a, 11b and the second bearing element 5b, a circular current can flow in a loop through these parts, as denoted by I₁ in Fig. 3. This circular current path I₁ can act as a current path of a winding of a transformer, in this case it is regarded as the secondary winding 15 of a transformer, and the primary winding 17 is also provided as a separate part of the contact arrangement 7. The primary winding 17 is shown in Fig. 3 as comprising two exemplary winding loops 17i. However, in principle only one loop would be sufficient, and more loops could also be provided. The contact arrangement 7 of the depicted embodiment also comprises a transformer core 19 which is configured to enhance an inductive coupling of the primary and secondary windings of the transformer. The transformer core 19 of this example has a figure eight type shape and is built from a stack of E-shaped laminated iron sheets.

The primary winding is electrically connected to an alternating current source 21, which is shown only schematically in Fig. 3. An alternating current fed into the primary winding 17 by this current source 21 can induce an alternating current in the secondary winding 15, flowing along the circular path I₁. The circular current path I₁ comprises the two sliding contact elements 11a and 11b. Therefore, the overall resistance of this current path I₁ contains (and is limited towards lower values by) the resistance of these two sliding contact elements 11a and 11b. This resistance however, is a strong function of the current at each point in time, according to the curve shown in Fig. 1. For this reason, the resistance of the secondary winding is different for different points along the oscillation curve of the alternating current: During a zero-crossing of the alternating current curve, the resistance is highest, and at or near the current maxima, the resistance is lowest. The average resistance along this current path I₁ generally falls with an increasing average current level. Favorably, the average operating current of the transformer is such that the resistance though the sliding contact elements 11a and 11b is reduced by at least a factor of ten compared to a transformer current of zero.

The operating conditions (in particular the current level and sliding contact resistance) of the secondary winding 15 also influences the net flow of current between the first and second bearing elements 5a and 5b, in other words the shunt path provided by the two sliding contact elements 11a and 11b of each contact arrangement 7. This shunt path is represented by reference numeral I₂ in Fig. 4 and has two branches for each contact arrangement 7. Fig. 4 shows a sectional view of the embodiment of Fig. 3, where the sectional plane runs perpendicular to the axis of rotation A and through the contact holder 9, sliding contact elements 11a and 11b, through a center of the transformer core 19 and through the second bearing element 5a, which in this case extends further in the axial direction (towards the viewer in Fig. 4) than the first bearing element 5b. Due to this configuration, the two sliding contact elements 11a and 11b can slide on the outer cylindrical surface 25b of the second (here: inner) bearing element 5b. However, in principle it is also possible that the sliding contact elements slide on a side surface of the second bearing element 5b, in other words not a radially outer surface, but instead an axially outer surface of a cylinder-shaped part of the second bearing element 5b. Irrespective of the exact configuration, an essential functionality of the contact arrangement 7 is to provide a shunt current path I₂, with one branch through each sliding contact element 11a and 11b, where the resistance of this shunt path I₂ can be lowered by feeding an alternating current into the primary winding of the transformer. Compared to known configurations, where a shunt path between the two bearing elements is provided by individual sliding contacts which are not part of such a transformer, the shunt resistance can be significantly lowered, and the protection of the bearing from electrical discharges can therefore be improved.

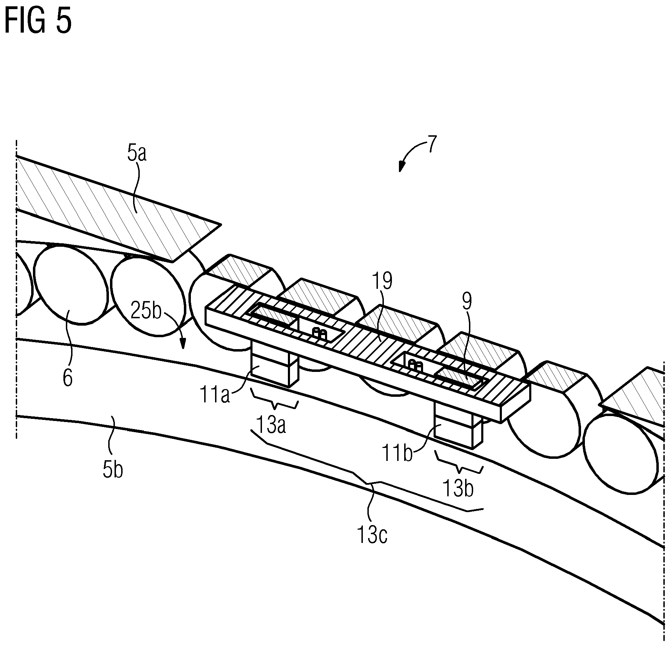

Fig. 5 shows a further sectional view of the embodiment of the contact arrangement according to Figs. 2-4. The sectional plane is in this case a tangential plane of the essentially cylindrical bearing running though a center of the transformer core 19. The depicted elements and their function is the same as explained before with reference to Figs. 2-4.

Referring again to Fig. 2, the depicted rotational bearing comprises three contact arrangements 7 which are distributed along the circumference of the essentially cylindrical bearing. In principle, each contact arrangement can have the same configuration as explained previously with respect to Fig. 3, and they can also be driven with one common alternating current source 21 which can be connected to the primary windings 17 of all three contact arrangements 7.

In a different embodiment however, the three contact arrangements 7 can also be driven by three separate current sources which can favorably be phase-shifted by around 120° between each pair of neighboring contact arrangements. Alternatively, the separate current sources can be configured to provide an alternating current with different frequency for each of the three contact arrangements 7.

## Claims

1. Contact arrangement (7) for electrically contacting an inner and an outer bearing element (5a, 5b) of a rotational bearing (3) allowing a coaxial rotation between the inner and outer bearing elements (5a,5b),
the contact arrangement (7) comprising
- a contact holder (9) mountable on a first one of the two bearing elements (5a),
- at least two sliding contact elements (11a, 11b) mounted on the contact holder (9),
wherein each sliding contact element (11a, 11b) is suitable for forming a sliding contact with a part of a surface (13a,13b) of the second one of the two bearing elements (5b), **characterized in that** :
- the contact holder (9) and the sliding contact elements (11a, 11b) are disposed such that a secondary winding (15) is formed with at least one winding loop (15) extending along a first sliding contact element (11a), the contact holder (9), the second contact element (11b) and a part of the surface (13c) of the second bearing element (5b), provided that the surface is formed of an electrically conductive material, and
- the contact arrangement (7) further comprising a primary winding (17) with at least one winding loop (17i), wherein the primary (17) and secondary (15) windings are disposed to form a transformer.

2. Contact arrangement (7) according to claim 1, wherein the contact holder (9) is U-shaped.

3. Contact arrangement (7) according to either of claims 1 or 2, further comprising a transformer core (19) suitable for inductively coupling the primary winding (17) and the secondary winding (15).

4. Contact arrangement (7) according to one of the preceding claims, further comprising an alternating current source (21) which is configured to provide an alternating current to the primary winding (17).

5. Contact arrangement (7) according to one of the preceding claims, wherein the sliding contact elements (11a, 11b) are brush contact elements.

6. Contact arrangement (7) according to one of the preceding claims, wherein the sliding contact elements (11a, 11b) comprise copper, brass, steel, silver and/or an alloy.

7. Rotational bearing (3) comprising an inner bearing element (5b) and an outer bearing element (5a),
wherein the rotational bearing (3) is disposed to allow a coaxial rotation between the inner and outer bearing elements (5a,5b),
the bearing (3) further comprising at least one contact arrangement (7) according to one of the preceding claims, wherein the contact holder (9) is mounted on a first one of the two bearing elements (5a),
and wherein the sliding contact elements (11a, 11b) are each arranged to form a sliding contact with part of a surface (13a,13b) of the second one of the two bearing elements (5b).

8. Rotational bearing (3) according to claim 7, wherein the first bearing element (5a) is the outer bearing element and the second bearing element (5b) is the inner bearing element of the rotational bearing.

9. Rotational bearing (3) according to claim 7, wherein the first bearing element is the inner bearing element and the second bearing element is the outer bearing element of the rotational bearing.

10. Rotational bearing (3) according to one of claims 7 to 9, comprising a plurality of contact arrangements (7) according to one of claims 1 to 6,
wherein the contact arrangements (7) are distributed across a circumference of the rotational bearing (3).

11. Rotational bearing (3) according to claim 10, comprising a plurality of alternating current sources (21), wherein the alternating current sources (21) are each configured to provide alternating current with a shifted phase and/or different frequency to each of the primary windings (17) of the contact arrangements (7).

12. Rotational bearing (3) according to one of claims 7 to 11, where the bearing is a bearing for a wind turbine generator.

13. Wind turbine generator with a bearing (3) according to claim 12.

14. Method for operating a rotational bearing (3) according to one of the claims 7 to 12, comprising the step of providing an alternating current to the primary winding (17) of the at least one contact arrangement (7).

15. Method for operating a rotational bearing (3) according to one of claims 10 or 11, comprising the step of providing an alternating current to each of the primary windings (17) of the plurality of contact arrangements (7), where each contact arrangement (7) is driven with a current of different phase and/or different frequency.

## Patentansprüche

1. Kontaktanordnung (7) zum Herstellen eines elektrischen Kontakts zwischen einem innenliegenden und einem außenliegenden Lagerelement (5a, 5b) eines Rotationslagers (3), der eine koaxiale Rotation des innenliegenden und des außenliegenden Lagerelements (5a, 5b) ermöglicht,
wobei die Kontaktanordnung (7) Folgendes umfasst:
- einen Kontakthalter (9), der sich an einem ersten der beiden Lagerelemente (5a) anbringen lässt,
- mindestens zwei Gleitkontaktelemente (1a, 11b), die an dem Kontakthalter (9) angebracht sind,
wobei jedes Gleitkontaktelement (11a, 11b) zum Bilden eines Gleitkontakts mit einem Teil einer Oberfläche (13a, 13b) des zweiten der beiden Lagerelemente (5b) geeignet ist,
**dadurch gekennzeichnet, dass**:
- der Kontakthalter (9) und die Gleitkontaktelemente (11a, 11b) so angeordnet sind, dass eine Sekundärwicklung (15) mit mindestens einer Windung (15) gebildet wird, die an einem ersten Gleitkontaktelement (11a), dem Kontakthalter (9), dem zweiten Kontaktelement (11b) und einem Teil der Oberfläche (13c) des zweiten Lagerelements (5b) entlang verläuft, vorausgesetzt, die Oberfläche ist aus einem elektrisch leitfähigen Material gebildet, und
- die Kontaktanordnung (7) ferner eine Primärwicklung (17) mit mindestens einer Windung (17i) umfasst, wobei die Primär- (17) und die Sekundärwicklung (15) so angeordnet sind, dass sie einen Transformator bilden.

2. Kontaktanordnung (7) nach Anspruch 1, wobei der Kontakthalter (9) U-förmig ist.

3. Kontaktanordnung (7) nach Anspruch 1 oder 2, die ferner einen Transformatorkern (19) umfasst, der zum induktiven Koppeln der Primär- (17) und der Sekundärwicklung (15) geeignet ist.

4. Kontaktanordnung (7) nach einem der vorhergehenden Ansprüche, die ferner eine Wechselstromquelle (21) umfasst, die so konfiguriert ist, dass sie die Primärwicklung (17) mit einem Wechselstrom versorgt.

5. Kontaktanordnung (7) nach einem der vorhergehenden Ansprüche, wobei es sich bei den Gleitkontaktelementen (11a, 11b) um Bürstenkontaktelemente handelt.

6. Kontaktanordnung (7) nach einem der vorhergehenden Ansprüche, wobei die Gleitkontaktelemente (11a, 11b) Kupfer, Messing, Stahl, Silber und/oder eine Legierung umfassen.

7. Rotationslager (3) mit einem innenliegenden Lagerelement (5b) und einem außenliegenden Lagerelement (5a),
wobei das Rotationslager (3) so angeordnet ist, dass es eine koaxiale Rotation des innenliegenden und des außenliegenden Lagerelements (5a, 5b) ermöglicht,
wobei das Lager (3) ferner mindestens eine Kontaktanordnung (7) nach einem der vorhergehenden Ansprüche umfasst,
wobei der Kontakthalter (9) an einem ersten der beiden Lagerelemente (5a) angebracht ist,
und wobei die Gleitkontaktelemente (11a, 11b) jeweils so angeordnet sind, dass sie mit einem Teil einer Oberfläche (13a, 13b) des zweiten der beiden Lagerelemente (5b) einen Gleitkontakt bilden.

8. Rotationslager (3) nach Anspruch 7, wobei es sich bei dem ersten Lagerelement (5a) um das außenliegende und bei dem zweiten Lagerelement (5b) um das innenliegende Lagerelement des Rotationslagers handelt.

9. Rotationslager (3) nach Anspruch 7, wobei es sich bei dem ersten Lagerelement um das innenliegende und bei dem zweiten Lagerelement um das außenliegende Lagerelement des Rotationslagers handelt.

10. Rotationslager (3) nach einem der Ansprüche 7 bis 9 mit mehreren Kontaktanordnungen (7) nach einem der Ansprüche 1 bis 6, wobei die Kontaktanordnungen (7) um einen Umfang des Rotationslagers (3) verteilt sind.

11. Rotationslager (3) nach Anspruch 10, das mehrere Wechselstromquellen (21) umfasst, wobei die Wechselstromquellen (21) jeweils so konfiguriert sind, dass sie jede der Primärwicklungen (17) der Kontaktanordnungen (7) mit Wechselstrom mit einer Phasenverschiebung und/oder einer anderen Frequenz versorgen.

12. Rotationslager (3) nach einem der Ansprüche 7 bis 11, wobei es sich bei dem Lager um ein Lager für einen Generator einer Windenergieanlage handelt.

13. Generator einer Windenergieanlage mit einem Lager (3) nach Anspruch 12.

14. Verfahren zum Betreiben eines Rotationslagers (3) nach einem der Ansprüche 7 bis 12 mit dem Versorgen der Primärwicklung (17) der mindestens einen Kontaktanordnung (7) mit einem Wechselstrom.

15. Verfahren zum Betreiben eines Rotationslagers (3) nach einem der Ansprüche 10 oder 11 mit dem Versorgen jeder Primärwicklung (17) der mehreren Kontaktanordnungen (7) mit einem Wechselstrom, wobei jede Kontaktanordnung (7) mit einem Strom mit anderer Phase und/oder anderer Frequenz betrieben wird.

## Revendications

1. Agencement de contact (7) permettant de mettre en contact électrique un élément de palier intérieur et extérieur (5a, 5b) d'un palier rotatif (3) autorisant une rotation coaxiale entre les éléments de palier intérieur et extérieur (5a, 5b), l'agencement de contact (7) comprenant
- un support de contact (9) pouvant être monté sur un premier des deux éléments de palier (5a),
- au moins deux éléments de contact à frottement (11a, 11b) montés sur le support de contact (9),
dans lequel chaque élément de contact à frottement (11a, 11b) est adapté pour former un contact frottant avec une partie d'une surface (13a, 13b) du second des deux éléments de palier (5b),
**caractérisé en ce que** :
- le support de contact (9) et les éléments de contact à frottement (11a, 11b) sont disposés de telle manière qu'un enroulement secondaire (15) est formé par au moins une boucle d'enroulement (15) s'étendant le long d'un premier élément de contact à frottement (11a), du support de contact (9), du second élément de contact (11b) et d'une partie de la surface (13c) du second élément de palier (5b), étant entendu que la surface est formée d'un matériau électriquement conducteur, et
- l'agencement de contact (7) comprend en outre un enroulement primaire (17) doté d'au moins une boucle d'enroulement (17i), les enroulements primaire (17) et secondaire (15) étant agencés de façon à former un transformateur.

2. Agencement de contact (7) selon la revendication 1, dans lequel le support de contact (9) a une forme de U.

3. Agencement de contact (7) selon la revendication 1 ou 2, comprenant en outre un noyau de transformateur (19) adapté pour coupler de façon inductive l'enroulement primaire (17) et l'enroulement secondaire (15).

4. Agencement de contact (7) selon l'une des revendications précédentes, comprenant en outre une source de courant alternatif (21) qui est conçue pour fournir un courant alternatif à l'enroulement primaire (17).

5. Agencement de contact (7) selon l'une des revendications précédentes, dans lequel les éléments de contact à frottement (11a, 11b) sont des éléments de contact à balai.

6. Agencement de contact (7) selon l'une des revendications précédentes, dans lequel les éléments de contact à frottement (11a, 11b) comprennent du cuivre, du laiton, de l'acier, de l'argent et/ou un alliage.

7. Palier rotatif (3) comprenant un élément de palier intérieur (5b) et un élément de palier extérieur (5a),
dans lequel le palier rotatif (3) est agencé pour permettre une rotation coaxiale entre les éléments de palier intérieur et extérieur (5a, 5b),
le palier (3) comprenant en outre au moins un agencement de contact (7) selon l'une quelconque des revendications précédentes,
dans lequel le support de contact (9) est monté sur un premier des deux éléments de palier (5a), et
les éléments de contact à frottement (11a, 11b) sont agencés chacun pour former un contact frottant avec une partie de la surface (13a, 13b) du second des deux éléments de palier (5b).

8. Palier rotatif (3) selon la revendication 7, dans lequel le premier élément de palier (5a) est l'élément de palier extérieur et le second élément de palier (5b) est l'élément de palier intérieur du palier rotatif.

9. Palier rotatif (3) selon la revendication 7, dans lequel le premier élément de palier est l'élément de palier intérieur et le second élément de palier est l'élément de palier extérieur du palier rotatif.

10. Palier rotatif (3) selon l'une des revendications 7 à 9, comprenant une pluralité d'agencements de contact (7) selon l'une des revendications 1 à 6,
dans lequel les agencements de contact (7) sont distribués sur une circonférence du palier rotatif (3).

11. Palier rotatif (3) selon la revendication 10, comprenant une pluralité de sources de courant alternatif (21), dans lequel les sources de courant alternatif (21) sont chacune configurées pour fournir un courant alternatif déphasé et/ou d'une fréquence différente à chacun des enroulements primaires (17) des agencements de contact (7).

12. Palier rotatif (3) selon l'une des revendications 7 à 11, où le palier est un palier pour un générateur d'éolienne.

13. Générateur d'éolienne comprenant un palier (3) selon la revendication 12.

14. Procédé pour faire fonctionner un palier rotatif (3) selon l'une des revendications 7 à 12, comprenant l'étape consistant à fournir un courant alternatif à l'enroulement primaire (17) du au moins un agencement de contact (7).

15. Procédé pour faire fonctionner un palier rotatif (3) selon l'une des revendications 10 ou 11, comprenant l'étape consistant à fournir un courant alternatif à chacun des enroulements primaires (17) de la pluralité des agencements de contact (7), dans lequel chaque agencement de contact (7) est activé avec un courant de phase différente et/ou de différente fréquence.
